Europäisches Patentamt

(19) European Patent Office

Office européen des brevets

(11) Publication number: **0 057 185**
**B1**

(12) EUROPEAN PATENT SPECIFICATION

(45) Date of publication of patent specification: **05.09.84**

(51) Int. Cl.³: **B 29 C 5/04**

(21) Application number: **81900970.5**

(22) Date of filing: **15.04.81**

(86) International application number:
**PCT/GB81/00070**

(87) International publication number:
**WO 81/02994 29.10.81 Gazette 81/25**

(54) MOULDING PROCESS FOR PLASTICS.

(30) Priority: **18.04.80 GB 8012907**

(43) Date of publication of application:
**11.08.82 Bulletin 82/32**

(45) Publication of the grant of the patent:
**05.09.84 Bulletin 84/36**

(84) Designated Contracting States:
**AT CH DE FR GB LI LU NL SE**

(56) References cited:
FR-A-1 331 884
FR-A-1 457 209
FR-A-2 021 070
FR-A-2 292 623
GB-A-1 160 961
US-A-3 610 457
US-A-3 713 937
US-A-4 143 193

(73) Proprietor: **MASTERNET LIMITED**
**73-75 Mortimer Street**
**London W1N 7TB (GB)**

(72) Inventor: **SEDDON, Rodney Guy**
**25 Lysia Street**
**London S.W. 6 (GB)**
Inventor: **SMITH, Stephen James**
**100 Stace Way Pound Hill**
**Crawley West Sussex (GB)**

(74) Representative: **Smith, Philip Antony et al**
**REDDIE & GROSE 16 Theobalds Road**
**London WC1X 8PL (GB)**

(56) References cited:
**Research Disclosure, no. 167, publ. March 1978,
Industrial Opportunities Ltd. (GB), I.F.
Coulston: "Rotationally moulding different
parts of an article from different plastics in a
single operation", disclosure no. 16776, pages
55 and 56**

Courier Press, Leamington Spa, England.

# Description

The present invention relates to the moulding of plastics materials. It is particularly concerned with the process which will be referred to in this specification as rotational moulding.

Rotational moulding is well known as a technique for moulding hollow articles of plastics material and is widely used in several different forms and under a variety of names, such as slush moulding and rotary casting. In the rotational moulding process a mouldable material is spread over the inner surfaces of a heated female mould by agitation of the mould about one or more axes and then solidified by cooling.

The agitation of the mould may involve continuous rotation about one axis combined with movement about another axis or axes or may involve no more than reciprocation about two or more axes. The material is commonly introduced into the mould in powder form and the heating of the mould causes melting of the material and adherence of the molten material to the heated areas of the mould wall. Heating of the mould may be effected by exposing it to gas flames or a current of hot air or by any other convenient method, usually by application of heat to the outside of the mould.

The mould is usually made in two parts joined together by flanges connected by bolts and nuts, toggle clamps, or other fastenings. After solidification of the moulding inside the mould the parts of the mould are separated and the moulding removed. While a hollow body with no opening (except perhaps a vent hole) can be produced it is also possible to produce bodies with substantial openings, corresponding to regions of the mould which have been deliberately kept cool during the moulding process so that the plastics material did not cover these regions.

Further information concerning some forms of rotational moulding, including details of materials to be used, is to be found in "A guide to rotational moulding" published by The British Plastics Federation in November 1972. However, in that publication only rotation about two perpendicular axes is referred to, whereas, as has been explained above, other forms of agitation of the mould can also be used.

The known processes of rotational moulding are capable of producing hollow articles with varied shapes and in a very wide range of sizes. In most cases, however, whether the moulding is completely closed or has openings at its ends or elsewhere, rotational moulding produces a one-piece moulding with a single internal space. The process has been known and used for some thirty years. Developments proposed have included the incorporation of inserts into the walls of the moulding and the formation of pairs of mouldings in a single piece which is cut into two parts after formation.

US—A—3,713,937 describes a method of producing a hollow body of plastics material by rotational moulding in which a pre-formed member is supported within the mould and parts of the said member are integrally connected to the walls of the moulding during formation. The hollow body is a flexible bag and the preformed member is a filter screen dividing the bag into two compartments. During moulding the filter screen is covered on both sides by protective masks heat-sealed to the screen to prevent plugging of the screen with liquid plastic. The margin of the screen is left free of the masks for clamping between two halves of the mould and to allow for easy removal of the masks. The screen, the masks, and the walls of the moulding are all composed of the same material which is likely to fuse at the temperature which the mould reaches during moulding.

The method in accordance with the present invention is characterized in that the margin of the preformed member has openings positioned adjacent the inner surface of the mould which allow penetration of the moulding material from opposite sides of the preformed member to fill the openings and form a direct bond between parts of the moulding wall on said opposite sides whereby the moulding walls are interlocked with the preformed member.

The preformed member may tie parts of the moulding together to strengthen the walls against internal pressure and for this purpose may be a bar or strip whose ends are embedded in the walls of the moulding. The preformed member may be a plate or sheet of which part of the margin is embedded in the moulding wall so that the member forms a baffle within the finished moulding. Alternatively if the whole of the peripheral margin is embedded in the moulding wall the member may form a partition in the finished moulding or may serve as a membrane to divide the mould space only until moulding is completed.

The membrane may be a continuous sheet which divides the mould into separate chambers and thus enables the parts of the moulding to be made of different materials. This may be useful for obtaining mouldings in several colours or mouldings whose parts have different physical properties. If the continuous membrane remains in place in the finished moulding it will divide the internal space into compartments which can be used to contain different materials or may provide floatation bulkheads or insulation compartments.

However, where the member is not required in the finished product and serves only to separate different materials during the moulding process it can be removed after formation of the moulding. For example the membrane can be removed by melting at a late stage in the moulding process.

Alternatively the membrane may be employed primarily for strengthening the finished moulding and in this case it may have one or more preformed openings which allow communication between the chambers on opposite sides of the membrane. Normally in such a case the parts of the moulding will be of the same material on both sides of the membrane.

A membrane made of the same material as the walls of the moulding can act as a divider or as a strengthening member. For dividing the moulding a weaker, more flimsy material may be used, such as stiff paper or thin plastics sheeting. For strengthening purposes the membrane may be of a stronger, more rigid material, such as metal.

A perforated or apertured membrane may serve in the finished moulding as a strainer or sieve. It may also project beyond the outer surface of the moulding to provide one or more points of attachment.

Thus the invention opens up a wide range of possibilities for the formation of new products by means of the rotational moulding process. The invention will now be described in more detail with the aid of examples illustrated in the accompanying drawings, in which:—

Fig. 1 is a side view and Fig. 2 is an end view of an example of rotational moulding apparatus suitable for carrying out the method of the present invention,

Fig. 3 is a longitudinal section of a mould showing the way in which a membrane or diaphragm can be mounted in the mould for carrying out the method of invention,

Fig. 4 is a section similar to that of Fig. 3 showing the use of a two-part membrane,

Fig. 5 is a plan view of the membrane of Fig. 4,

Fig. 6 is a section similar to that of Fig. 3 but showing the mounting of a membrane on a vent pipe, and

Figs. 7 and 8 are plan views of different types of membrane which can be used in the method of the invention.

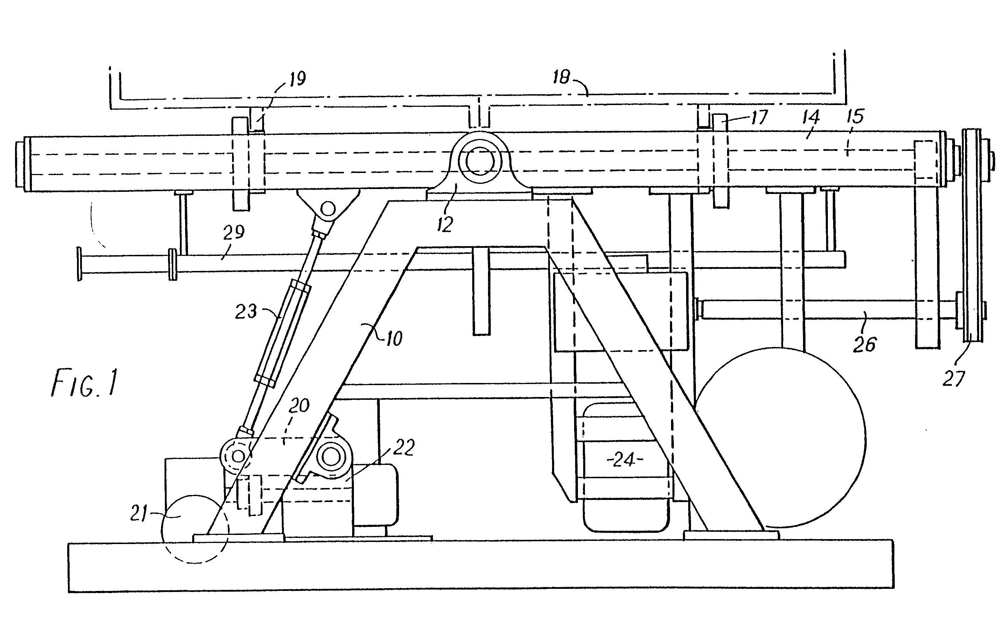

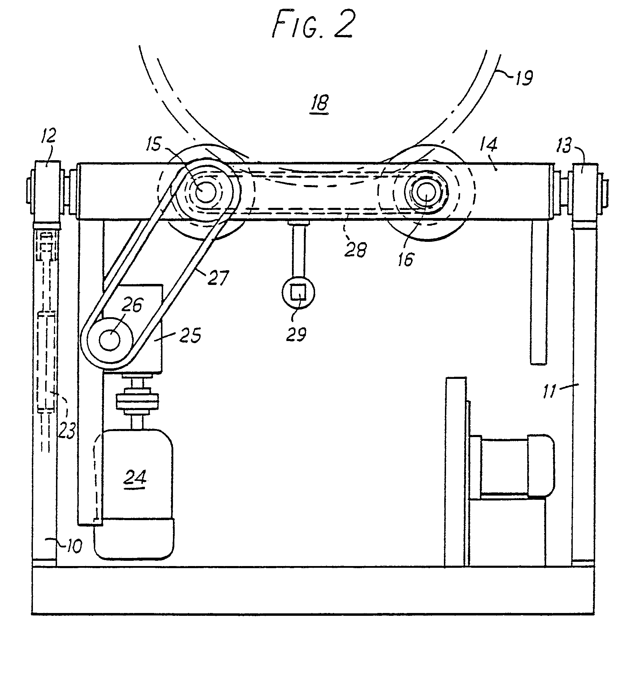

Purely by way of illustration, Figs. 1 and 2 show rotational moulding apparatus in which the mould is rotated about one axis and rocked about a transverse axis. It is to be understood that other types of apparatus, for example providing rotation about two perpendicular axes, would also be suitable for carrying out the invention. However, development and testing of the method of the invention have been carried out with apparatus similar to that to be described.

The apparatus shown has a pair of supporting frames 10 and 11 carrying trunnions 12 and 13 in which a rectangular frame 14 is mounted for rocking movement about a horizontal axis. The frame 14 supports two drive shafts 15 and 16 which carry flanged drive rollers 17. The mould, which is in the form of a generally cylindrical drum 18, has external flanges 19 which rest on the drive rollers 17. Thus upon rotation of the shafts 15 and 16 the drum 18 is caused to rotate about an axis transverse to the rocking axis of the frame 14.

The rocking of the frame 14 is effected by a swing arm 20 driven through reduction gear units 21 and 22 by a motor (not shown) and coupled to the frame 14 by an adjustable link 23 pivotally connected at one end to the frame and at the other to the swing arm 20. The drive for the shafts 15 and 16 is provided by a motor 24 suspended below the frame 14 and driving through a gear unit 25 an output shaft 26 which is coupled by a belt 27 to the shaft 15. The shafts 15 and 16 are coupled together by a belt 28.

For heating the mould a gas burner 29 is mounted on the frame 14 below and between the shafts 15 and 16. The burner 29 extends along the length of the mould 18 so that the flames emerging from the burner openings heat the cylindrical surface of the drum.

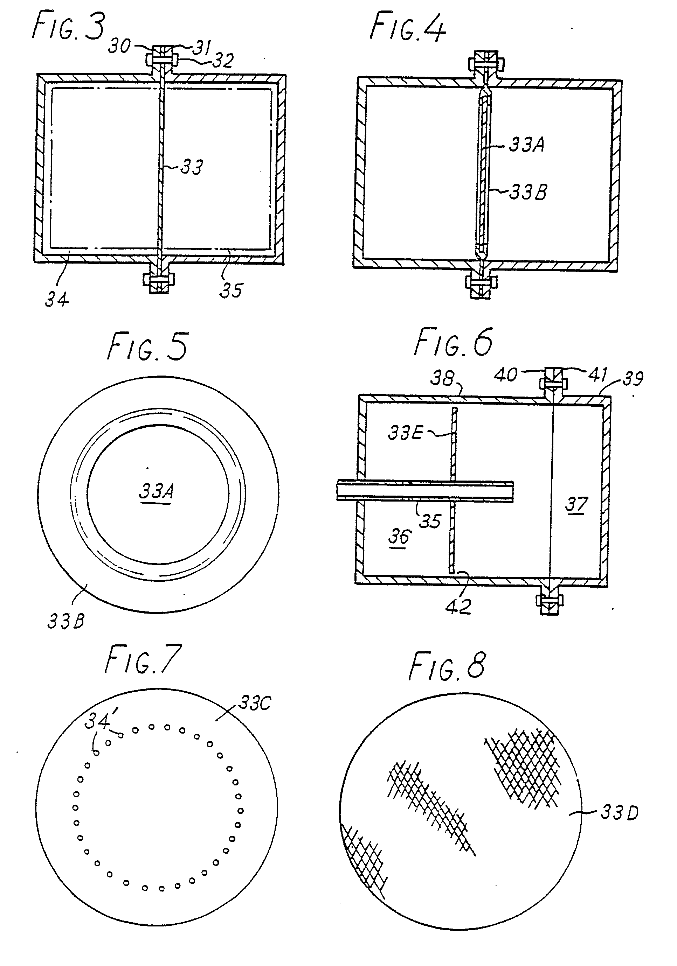

Fig. 3 shows a hollow cylindrical drum mould 18 which is made in two halves which have clamping flanges 30 and 31 which can be clamped together by bolts 32, as shown, or by external clamps. A membrane 33 is clamped between the flanges 30 and 31. The membrane 33 is a circular plate of the same material as is to be used for forming the moulding. A charge of moulding powder is placed in each half of the mould before the membrane is placed in position and the mould is closed. In the course of the moulding process the powder is softened by heat and spread over the internal surfaces of the mould by the rolling and rocking of the mould to form two halves 34 and 35 of the moulded article on opposite sides of the membrane 33. The two halves 34 and 35 are integrally bonded to the membrane 33.

After cooling the mould is opened and the moulded article removed. In this instance the article has the form of a closed cylindrical drum divided internally by the membrane 33 into two compartments and having an external peripheral flange formed by the periphery of the membrane. This flange may be useful for mounting purposes but otherwise can be trimmed away. By adjusting the size of the membrane and the way in which it is mounted in the mould the projecting flange can be made small or non-existent. The internal partition formed by the membrane gives added strength to the walls of the moulding. The two compartments separated by the membrane can be filled with different materials if openings are formed in the drum walls on opposite sides of the membrane. Such openings can be formed by cutting through the walls of the finished moulding or can be formed in conventional manner in the course of the moulding process.

The division of the mould cavity into two separate chambers allows the use of different moulding powders on opposite sides of the membrane. While it may not be possible to use materials with widely differing properties if they are both to bond securely to the membrane and be moulded at the same temperature and in the same time, it is possible to use materials with different colours and thus achieve a two-colour moulding in a single process.

The arrangement of Figs. 4 and 5 differs from that of Fig. 3 in that the membrane consists of a central disc 33A and a marginal portion 33B which embraces the peripheral edge of the disc 33A and serves for mounting in the mould and for bonding to the two halves of the moulding. The marginal portion 33B is preferably formed of a strip pre-formed by moulding or extrusion, cut to length, and wrapped around the periphery of the disc 33A to form a ring. This two part construction allows the central disc 33A to be pushed out and removed after completion of the moulding. It is therefore useful when the two halves of the moulding are to be made of different materials but a dividing or strengthening partition is not required in the finished article.

Another way of achieving this result is to have a membrane or diaphragm which melts away in the final stages of the moulding operation (but before the cooling of the mould). This can be achieved by choice of a material for the membrane which has different physical properties from the material of the moulding or, conveniently, by forming the membrane thicker around its margin so that the thinner central portion melts away.

The membrane 33C, shown in Fig. 7, has a ring of holes 34' at its margin such that when the membrane is mounted as shown in Fig. 3 the holes 34' are close to the inner surface of the mould and allow penetration of the moulding material from opposite sides of the membrane. By this means a direct bond can be formed between the two halves of the moulding to supplement or partially replace the bond with the margin of the membrane. This is particularly useful when the membrane is made of a material different from the moulding material. The size of the holes 34' and the conditions of moulding are chosen to ensure that the separation of the two halves of the moulding is maintained where these are made of different colours or different materials.

Fig. 8 shows a membrane 33D which is perforated over its whole area and in this case is made of expanded metal. Such a membrane does not separate the two halves of the moulding during the moulding process but does provide increased strength in the finished article and may also be useful for mounting of the article when it projects as a flange from the outer surface. Also a perforated membrane may serve as a strainer or sieve in the finished article.

Referring now to Fig. 6, this shows an alternative method of supporting the membrane during the moulding process. It is conventional to provide such a mould with a vent pipe 35 to equalize the pressure inside and outside the mould. As shown a membrane 33E is mounted on the vent pipe 35 and divides the mould into two chambers 36 and 37. The two parts 38 and 39 of the mould are joined by way of respective flanges 40 and 41 but the plane of the membrane 33E no longer has to coincide with the plane of the flanges 40 and 41. The periphery of the membrane 33E is spaced from the inner surface of the mould by a gap 42. The moulding conditions are so arranged that this gap 42 is bridged by the moulding material at an early stage, preventing transfer of moulding material between the chambers 36 and 37. Such an arrangement still results in fusion of the membrane with the walls of the moulding but may avoid distortion of the walls which can occur as a result of shrinkage when the edge of the membrane is trapped between the walls of the two halves of the moulding.

The foregoing description has referred especially to the use of membranes made of the same material as the moulding itself in order to achieve complete fusion of the membrane with the wall of the moulding, and also to the use of an expanded metal membrane. A wide range of other materials can be used for various special purposes. To improve bonding the edge of the membrane may be coated with a material which is more compatible with the moulding material than the main part of the membrane. Thus a metal membrane could have a coating of synthetic resin around its periphery.

For a polyethylene moulding it is possible to make the membrane of polyethylene film. However such film usually shrinks when heat is applied. It is therefore necessary either to support the film or protect it from heat, e.g. by means of a layer of aluminium foil. A thicker plate of polyethylene will not create so much of a problem but may result in some distortion of the walls of the moulding. Other materials which may be used include synthetic and natural fabrics, paper and board. In the use of a two part membrane the central disc can be of cardboard and the rim or margin of synthetic plastics material.

While the moulds and mouldings described have been of generally cylindrical form it is of course possible to produce other shapes by rotational moulding, including articles of generally rectangular or polygonal cross-section. A single membrane is used in the examples described but there is no reason why a number of membranes should not be used to divide the space within the mould into three or more chambers. Two intersecting membranes will serve to produce four compartments. In a more complex structure the membrane may carry a pre-formed inner container which is then totally or partially enclosed within an outer moulding. The membrane in this instance has the form of a box (the inner container) with a projecting peripheral flange serving for attachment to the outer moulding.

It will be appreciated that the membrane is not necessarily continuous and is not necessarily bonded to the moulding wall around its whole periphery. Where only part of the periphery of a plate is bonded to the wall the result is a baffle within the finished moulding. The reduction of the area of the plate may proceed to the point where it is no more than a strengthening ring embedded in the moulding wall around its whole periphery or a strut having its ends embedded in the moulding walls.

An important application of such membranes is to the closing of internal recesses in a moulding which are inconvenient in the use of the moulded article. For example in wheelbarrows or pallet bins it is desirable to avoid internal recesses in which materials being transported will lodge. However the moulding usually includes one or more projections to form feet or to provide for mounting of the wheels. Membranes can be used in accordance with the method of the invention to separate the internal spaces of such projections from the main load-carrying space of the container. Mounting blocks for the wheels can then be incorporated in the internal spaces of the projections during or after the moulding process.

## Claims

1. A method of producing a hollow body of plastics material by rotational moulding in which a preformed member (33) is supported within the mould (30, 31) and parts of the said member are integrally connected to the walls of the moulding during formation characterised in that the margin of the preformed member (33) has openings (34') positioned adjacent the inner surface of the mould which allow penetration of the moulding material from opposite sides of the preformed member (33) to fill the openings (34') and form a direct bond between parts (34, 35) of the moulding wall on said opposite sides whereby the moulding walls are interlocked with the preformed member (33).

2. A method as claimed in claim 1 in which the preformed member (33) ties parts of the moulding together to strengthen the walls against distortion by internal pressure.

3. A method as claimed in claim 2 in which the preformed member comprises a bar or strip whose ends are embedded in the walls of the moulding.

4. A method as claimed in claim 1 characterised in that the preformed member is a continuous membrane separating two chambers within the mould, different moulding materials are introduced into the two chambers, and the openings in the margin of the membrane are dimensioned to prevent substantial transfer of materials between the chambers.

5. A method as claimed in claim 4 characterised in that the centre of the membrane is removed after formation of the moulding.

6. A method as claimed in claim 5 characterised in that the removal of the centre of the membrane is effected by melting.

7. A method as claimed in claim 5 characterised in that the membrane is composed of a central part (33A) and a rim (33B) formed to embrace the central part and form the margin of the membrane, whereby the central part can be removed from the rim after the latter has been joined to the peripheral walls of the moulding.

8. A method as claimed in claim 7 characterised in that the rim is formed as a profiled strip which is wrapped around the edge of the central part of the membrane.

9. A method as claimed in any of claims 1 to 8 characterised in that the margin of the preformed member (33E) is initially spaced from the mould, the gap (42) being filled by the moulding material during moulding.

## Patentansprüche

1. Verfahren zur Herstellung eines hohlen Formteils aus Kunststoff durch Rotationsgießen, bei dem ein vorgeformtes Element (33) in der Form (30, 31) abgestützt wird und Teile des Elements bei der Formgebung integral mit den Formteilwänden verbunden werden, dadurch gekennzeichnet, daß der Rand des vorgeformten Elements (33) nahe der Innenfläche der Form liegende Öffnungen (34') aufweist, die ein Eindringen des Gießmaterials von entgegengesetzten Seiten des vorgeformten Elements (33) her ermögliche, um die Öffnungen (34') zu füllen und eine direkte Verbindung zwischen auf den entgegengesetzten Seiten befindlichen Teilen (34, 35) der Formteilwände zu schaffen, wodurch die Formteilwände mit dem vorgeformten Element (33) verriegelt werden.

2. Verfahren nach Anspruch 1, dadurch gekennzeichnet, daß das vorgeformte Element (33) zur Versteifung der Wände gegen Verziehung durch inneren Druck Teile des Formteils miteinander verbindet.

3. Verfahren nach Anspruch 2, dadurch gekennzeichnet, daß das vorgeformte Element einen Stab oder Streifen enthält, dessen Enden in die Formteilwände eingebettet sind.

4. Verfahren nach Anspruch 1, dadurch gekennzeichnet, daß das vorgeformte Element eine zusammenhängende, innerhalb der Form zwei Kammern abtrennende Membran ist, in die beiden Kammern unterschiedliche Gießmaterialien gegeben werden und die Öffnungen im Rand der Membran so dimensioniert werden, daß ein wesentlicher Transport der Materialien zwischen den Kammern verhindert wird.

5. Verfahren nach Anspruch 4, dadurch gekennzeichnet, daß das Zentrum der Membran nach Bildung der Formteile entfernt wird.

6. Verfahren nach Anspruch 5, dadurch gekennzeichnet, daß das Zentrum der Membran durch Schmelzen entfernt wird.

7. Verfahren nach Anspruch 5, dadurch gekennzeichnet, daß die Membran aus einem Mittelabschnitt (33A) und einem Randabschnitt (33B) besteht, der so ausgebildet ist, daß er den Mittelabschnitt umgreift und den Rand der Membran bildet, wodurch der Mittelabschnitt vom Randabschnitt entfernt werden kann, nachdem dieser mit den peripheren Wänden des Formteils verbunden worden ist.

8. Verfahren nach Anspruch 7, dadurch gekennzeichnet daß der Randabschnitt als Profilstreifen ausgebildet und um den Rand des Mittelabschnitts der Membran gewickelt wird.

9. Verfahren nach einem der Ansprüche 1 bis 8, dadurch gekennzeichnet, daß der Rand des vorgeformten Elements (33E) zunächst von der Form beabstandet und der Spält (42) dann während des Gießvorgangs durch das Gießmaterial gefüllt wird.

## Revendications

1. Procédé de fabrication d'un corps creux en matière plastique par moulage rotationnel, dans lequel un organe préformé (33) est supporté à l'intérieur du moule (30, 31), et des parties de cet organe sont reliées monobloc aux parois de l'article moulé pendant la formation, caractérisé en ce que la marge de l'organe préformé (33) présente des ouvertures (34'), positionnées au voisinage de la surface intérieure du moule, qui permettent une pénétration de la matière de moulage à partir des côtés opposés de l'organe préformé (33), pour remplir les ouvertures (34'), et pour former une liaison directe entre des parties (34, 35) de la paroi de l'article moulé sur lesdits côtés opposés, de sorte que les parois de l'article moulé sont verrouillées avec l'organe préformé (33).

2. Procédé selon la revendication 1, caractérisé en ce que l'organe préformé (33) attache ensemble des parties de l'article moulé pour renforcer les parois contre une déformation due à la pression interne.

3. Procédé selon la revendication 2, caractérisé en ce que l'organe préformé comporte une barre ou une bande dans les extrémités sont noyées dans les parois de l'article moulé.

4. Procédé selon la revendication 1, caractérisé en ce que l'organe préformé est une membrane continue séparant deux chambres à l'intérieur du moule, en ce que différents matériaux de moulage sont introduits dans les deux chambres, et les ouvertures dans la marge de la membrane sont dimensionnées afin d'empêcher un transfert substantiel de matière entre les chambres.

5. Procédé selon la revendication 4, caractérisé en ce que le centre de la membrane est enlevé après formation de l'article moulé.

6. Procédé selon la revendication 5, caractérisé en ce que l'enlèvement du centre de la membrane est effectué par fusion.

7. Procédé selon la revendication 5, caractérisé en ce que la membrane est composée d'une partie centrale (33A), et d'une enveloppe (33B) formée pour embrasser la partie centrale et former la marge de la membrane, de sorte que la partie centrale peut être séparée de l'enveloppe après que cette dernière ait été reliée aux parois périphériques de l'article moulé.

8. Procédé selon la revendication 7, caractérisé en ce que l'enveloppe est constituée d'une bande profilée qui est roulée autour du bord de la partie centrale de la membrane.

9. Procédé selon l'une quelconque des revendications 1 et 8, caractérisé en ce que la marge de l'organe préformé (33E) est initialement espacée du moule, l'intervalle (42) étant rempli par la matière de moulage pendant le moulage.

FIG.1

0 057 185

# FIG. 2

2

FIG.3

FIG.4

FIG.5

FIG.6

FIG.7

FIG.8